# EUROPÄISCHE PATENTSCHRIFT

(11) **EP 1 357 810 B1**
(45) Veröffentlichungstag und Bekanntmachung des Hinweises auf die Patenterteilung: **14.07.2004**
(21) Anmeldenummer: 02716022.5
(22) Anmeldetag: 04.02.2002
(51) Int. Cl.: A23N 17/00

(54) **VERFAHREN UND ANLAGE ZUM KÜHLEN**
METHOD AND INSTALLATION FOR COOLING
PROCEDE ET INSTALLATION DE REFROIDISSEMENT

(30) Priorität: 05.02.2001 DE 10105344
(43) Veröffentlichungstag der Anmeldung: 05.11.2003
(73) Patentinhaber: Bühler AG, 9240 Uzwil (CH)
(72) Erfinder: HANIMANN, Philipp, CH-9000 St.Gallen (CH); SOHMER, Klaus, CH-9247 Henau (CH); FLECK, Dirk-Michael, 72070 Tübingen (DE)
(74) Vertreter: Frommhold, Joachim, Dr.
(86) Internationale Anmeldenummer: PCT/CH2002/000059
(87) Internationale Veröffentlichungsnummer: WO 2002/062162

(56) Entgegenhaltungen:
- EP-A- 1 023 844
- WO-A-00/49888
- GB-A- 2 322 284
- NL-A- 9 201 272
- US-A- 4 786 182
- US-A- 5 976 594
- PATENT ABSTRACTS OF JAPAN vol. 010, no. 107 (C-341), 22. April 1986 (1986-04-22) & JP 60 237978 A (SAKUMA SEISAKUSHO:KK), 26. November 1985 (1985-11-26)

## Beschreibung

Die Erfindung betrifft ein Verfahren zum Kühlen schüttfähiger Produkte, insbesondere von Futtermitteln, wie zum Beispiel Pellets bzw. Futterwürfel und eine Anlage zum Kühlen derartiger Güter.

Das Kühlen von noch warmen bis heissen Pellets bzw. Futterwürfeln ist als einstufiges Verfahren hinreichend bekannt. Hierbei werden die Pellets zunächst mit hohen und dann abflachenden Temperaturgradienten über bis zu 15-20 Minuten gekühlt. Darauf hin erfolgt entweder eine direkte Siebung in Pellets und Feinteile mit anschliessender Absackung oder Silolagerung der Pellets oder ein Brechen der Pellets und eine Siebung in Crumbles und Feinteile. Nachteilig bei beiden Prozessvarianten ist, dass ein Produktwechsel erst nach Abschluss des gesamten Kühlvorganges, inklusive Kühlung der Pellets aus rückgeführten Feinteilen, erfolgen kann und das anfallende Feinprodukt nur unzureichend zurück geführt werden kann. Die zugehörigen Vorrichtungen bestehen im wesentlichen aus einer Futterwürfelpresse bzw. Expanderanlage mit einem Speise- und einem Mischaggregat und einer Pressform, an die sich ein Kanal zu einem Kühlaggregat anschliesst, wie dies zum Beispiel in der EP-A-610789 beschrieben ist. Auf den Kühler folgen ein Brechwerk und eine Siebeinrichtung mit einer Rückführeinrichtung zur Misch- bzw. Konditioniereinrichtung.

Bei einem Verfahren zur Herstellung von Mischfutter gemäss EP-A-1023844 werden Mischfutteragglomerate mit geringer Geruchsbelästigung für die Umwelt so hergestellt, dass das Ausgangsprodukt zunächst konditioniert, dann geformt, insbesondere zu Würfeln gepresst und anschliessend gekühlt wird. Dabei ist mindestens ein weiterer Schritt der Temperaturreduktion vorgesehen, der den Kontakt von Prozessluft mit Futterteilen direkt nach deren Bereitstellung bei einer erniedrigten Temperatur und/oder die Abgabe der Prozessluft an die Umgebung mit einer erniedrigten Temperatur ermöglicht, wobei dies ohne zusätzliche Kühlenergie erfolgen soll. Insbesondere soll das unnötige mitführen von Geruchsstoffen mit der Prozessluft verhindert werden. Vorgeschlagen wird deshalb eine Teilkühlung der Futterwürfel vor einer Beschichtung mit Zusatzstoffen.

Weiterhin kann diese Prozessluft auch durch das Ausgangsmaterial geführt werden, um dieses vorzuwärmen und Geruchsanteile zu kondensieren.

Für einen nachfolgenden Beschichtungsvorgang kann das geformte Mischfutter in einer ersten Kühlstufe nur auf eine Temperatur zwischen 60°C und 35°C, vorzugsweise 45°C gekühlt werden. Die Kühlvorrichtung ist aufwändig. Ein etwaiges Brechen und Sieben der Futterwürfel kann erst nach dem Verlassen der mehrstufigen Kühlvorrichtung erfolgen.

Weiterhin bekannt ist ein Verfahren zur Herstellung eines Tierfutters bei dem eine Emulsion die rohen Fisch enthält, in Pellets umgewandelt wird (WO 00/49888). Laut Beschreibung soll das pelletierte Produkt in einem Trockner, der mehrere Bereiche umfasst, getrocknet und gekühlt werden, bevor die teilweise gekühlten Pellets nachfolgend gesiebt, gekühlt und abgesackt werden. Nach der einzigen Figur dieses Standes der Technik gelangen die im Trockner gekühlten Produkte in einen Kompaktierer, dessen Funktion nicht näher beschrieben ist, doch können sie auch direkt in einen nachfolgenden Kühler vor der Absackung gelangen.

Die Aufgabe der Erfindung besteht nun darin, die Nachteile des bekannten Standes der Technik zu beseitigen und ein effektiveres Verfahren zum Kühlen schüttfähiger Produkte, insbesondere von Futtermitteln wie Pellets bzw. Futterwürfel zu entwickeln, weiches einen rascheren Produktwechsel sowie die Rückführung von mehr anfallendem Feinprodukt nach einem Siebvorgang ermöglicht. Die Aufgabe ist mit den kennzeichnenden Merkmalen des Anspruchs 1 gelöst. Insbesondere erfolgt nach dem Konditionieren und Formen ein Vorkühlen, gefolgt entweder von einem Sieben oder einem Brechen und Sieben der Produkte. Erst im Anschluss erfolgt ein Nachkühlen und Lagern der Produkte. Überraschend wurde festgestellt, dass die Produkte bereits oberhalb der Raumtemperatur ausreichend sieb- und crumbiefähig sind.

Eine weitere Aufgabe besteht darin, eine Anlage zum Kühlen derartiger Produkte zu schaffen. Beide Kühlstufen sind räumlich getrennt.

Die aus der EP-A-10223844 an sich vorbekannte, zweistufige Kühlvorrichtung ist nicht geeignet, den Erfindungsgedanken nahezulegen oder auszuführen, da mit der alleinigen Verwendung von rückgeführter Prozessluft kein ausreichendes Vorkühlen für zu brechende Pellets oder Futterwürfel erzielbar ist.

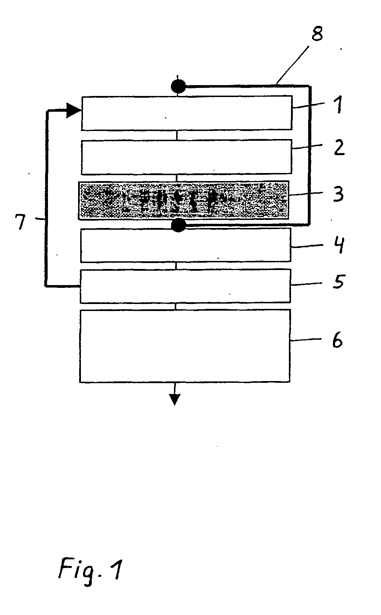

Die Erfindung wird nachfolgend in einem Ausführungsbeispiel an Hand einer Zeichnung näher beschrieben. In der Zeichnung zeigen die
- Fig. 1:: eine schematische Darstellung der Anlage zum Kühlen

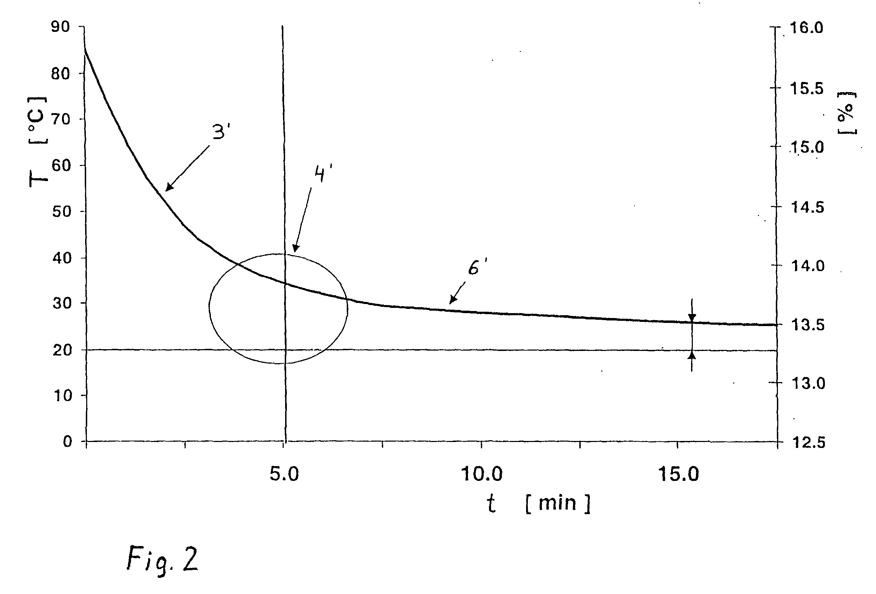

- Fig. 2:: ein Temperatur-Zeit-Diagramm des erfindungsgemässen Verfahrens zum Kühlen.

Eine Anlage zum Herstellen von Pellets oder Futterwürfeln umfasst einen Konditionierer 1 der Ausgangsprodukte und eine Formeinrichtung 2, wie sie zum Beispiel in der EP-A-610789 als beheizte Speise- und Mischeinrichtung, gefolgt von einer Pressform, beschrieben sind.

Auf die Formeinrichtung 2 folgt ein Vorkühler 3, wobei Formeinrichtung 2 und Vorkühler 3 bevorzugt durch einen Kanal miteinander verbunden sind. Dem Vorkühler 3 folgt entweder direkt ein Sieb 5 oder ein Brechwerk, zum Beispiel ein Würfelbrecher 4 mit einem Walzenpaar. Auf das Brechwerk 4 folgt ein Sieb 5. Das Sieb 5 weist übliche Einrichtungen zur Rückführung des Siebdurchfalls (Feinprodukt) an den Konditionierer 1 auf.

Der Siebüberlauf gelangt in einen Nachkühler 6, an den sich Lagereinrichtungen für die vollständig gekühlten Pellets anschliessen.

Ein konditioniertes Produkt wird in der Formeinrichtung 2 zu Pellets bzw. Futterwürfeln gepresst und die Pellets gelangen mit einer Temperatur T von ca. 80°-90°C und einer Produktfeuchte von ca. 15 % (in Abhängigkeit von klimatischen Bedingungen und Rohproduktfeuchte abweichend) in den Vorkühler 3, in welchem sie ca. 5 Minuten verweilen und dabei auf eine Temperatur von weniger als 40°C gekühlt (3') werden. Die Temperatur T des vorgekühlten Produktes kann je nach Kühlzeit t und Partikel- bzw. Pelletdurchmesser (zur Verdampfung verfügbare Oberfläche) etwas höher sein. Sie beträgt aber grundsätzlich weniger als 60°C. Kühlung und Trocknung erfolgen im wesentlichen durch Verdampfung der Oberflächenfeuchte durch konvektiven Wärme- und Stofftransport, was einen hohen Luftdurchsatz ermöglicht.

Die Produktfeuchte sinkt auf bzw. unter ca. 13,5 %, generell unter 14 %. Die Pellets sind nun bereits in ausreichendem Masse sieb- und crumblefähig (4') und gelangen daher auf den Würfelbrecher 4 und danach auf das Sieb 5 oder direkt auf das Sieb 5.

Abgesiebtes Feinprodukt wird in den Konditionierer 1 zurückgeführt und die Pellets gelangen in den Nachkühler 6, wo sie innerhalb von ca. 10 Minuten nahezu auf Raumtemperatur gekühlt werden (6') und eine erforderliche Produktfeuchte von weniger als 13 % erlangen. Bei der Nachkühlung erfolgt im wesentlichen eine langsamere Diffusion der Feuchte von innen nach aussen bzw. Wärmeleitung im Produkt. Die Temperaturdifferenz ist geringer als beim Vorkühlen, die Verweilzeit des Produkts im Nachkühler höher.

Gerade das Nachkühlen, d. h. der Ausgleich einer geringeren Temperaturdifferenz zur Raumtemperatur erfordert einen höheren Zeitaufwand als die Vorkühlung und bedingt so bei einstufiger Kühlung eine lange Verweilzeit des Produkts im Kühler. Erst nachdem das letzte Produkt, d. h. die Pellets aus rückgeführtem Feinanteil, den Kühler verlassen hat, kann ein Produktwechsel erfolgen. Beim erfindungsgemäss zweistufigen Kühlen reduziert sich die Wartezeit auf ca. 1/3. sobald das letzte Pellet den Vorkühler 3 verlassen hat, kann ein Produktwechsel vorgenommen werden.

Nach dem Sieb 5 kann vor dem Nachkühlen noch ein Besprühen des Produkts und dessen Trocknung im Nachkühler 6 erfolgen.

## Patentansprüche

1. Verfahren zum Kühlen von schüttfähigen Produkten, insbesondere Futtermitteln wie zum Beispiel Pellets durch ein Mischen, Konditionieren und Pressen bzw. Formen der Produkte in Pelletform oder dergleichen und nachfolgendes Kühlen, Brechen und Sieben dieser Produkte, wobei das Kühlen in zwei getrennten Stufen erfolgt, **dadurch gekennzeichnet, dass** in der ersten Stufe ein Vorkühlen der geformten Produkte erfolgt, für das ca. 1/3 der gesamten Kühlzeit beansprucht wird.

2. Verfahren nach Anspruch 1, **dadurch gekennzeichnet, dass** in der zweiten Kühlstufe, das Nachkühlen, nach dem Sieben oder dem Brechen und Sieben der Produkte erfolgt.

3. Verfahren nach Anspruch 1 oder 2, **dadurch gekennzeichnet, dass** das geformte Produkt vor dem Sieben oder Brechen und Sieben auf eine Temperatur von weniger als 60°C, bevorzugt weniger als 40°C vorgekühlt wird.

4. Verfahren nach mindestens einem der vorangehenden Ansprüche 1 bis 3, **dadurch gekennzeichnet, dass** das Produkt Pellet, nach dem Sieben mit mindestens einer Flüssigkeit besprüht wird.

5. Anlage zum Kühlen von schüttfähigen Produkten, insbesondere Futtermitteln wie zum Beispiel Pellets zur Ausführung eines Verfahrens nach den Ansprüchen 1 bis 4, umfassend einen Mischer und Konditionierer (1), eine Formeinrichtung (2) bzw. Pressform, einen Kühler sowie eine Brech- und Siebeinrichtung, **dadurch gekennzeichnet, dass** der Kühler einen Vorkühler (3) und einen, von diesem räumlich getrennten Nachkühler (6) umfasst, wobei der Vorkühler (3) nach der Formeinrichtung (2) angeordnet ist und der Nachkühler (6) dem Sieb (5) oder der Brech- und Siebeinrichtung nachgeordnet ist.

## Claims

1. A process for cooling bulk products, in particular foodstuffs, such as for example pellets, using mixing, conditioning and pressing or forming the products into pellet form or the like, and subsequent cooling, breaking and sifting of these products, whereby the cooling takes place in two separate steps, **characterised in that** precooling of the formed products takes place in the first step, for which ca. 1/3 of the total cooling time is taken up.

2. The process as claimed in Claim 1, **characterised in that**, the secondary cooling takes place after the sifting or breaking and sifting of the products in the second cooling step.

3. The process as claimed in Claim 1 or 2, **characterised in that** the formed product is precooled prior to sifting or breaking and sifting to a temperature of less than 60 °C, preferably less than 40 °C.

4. The process as claimed in at least one of the preceding Claims 1 to 3, **characterised in that** the product (pellet) is sprayed after sifting with at least one fluid.

5. A plant for cooling bulk products, in particular foodstuffs such as for example pellets for carrying out a process as claimed in Claims 1 to 4, comprising a mixer and conditioner (1), a forming device (2) or press mould, a cooler and a breaking and sifting device, **characterised in that** the cooler includes a precooler (3) and a secondary cooler (6), spatially separated from the latter, whereby the precooler (3) is arranged after the forming device (2) and the secondary cooler (6) is arranged downstream of the sieve (5) or the breaking and sifting device.

## Revendications

1. Procédé de refroidissement de produits en vrac, en particulier de fourrage, tel que par exemple des granulés, par un mélange, un conditionnement, un pressage ou un moulage des produits en forme de granulés ou analogues, puis par refroidissement consécutif, par concassage et par tamisage de ces produits, le refroidissement étant réalisé en deux étapes distinctes, **caractérisé en ce qu'**au cours de la première étape, on assiste à un refroidissement préliminaire des produits, qui requiert environ 1/3 du temps de refroidissement total.

2. Procédé selon la revendication 1, **caractérisé en ce qu'**au cours de la seconde étape, le refroidissement ultérieur a lieu après le tamisage ou après le concassage suivi du tamisage des produits.

3. Procédé selon l'une quelconque des revendications 1 ou 4, **caractérisé en ce que** le produit moulé est soumis à un refroidissement préalable à une température inférieure à 60 ° C, de préférence inférieure à 40 °C, avant le tamisage ou avant le concassage suivi du tamisage.

4. Procédé selon au moins l'une quelconque des revendications précédentes, **caractérisé en ce qu'**après le tamisage, le produit (granulé) est vaporisé avec au moins un liquide.

5. Installation destinée à refroidir des produits en vrac, notamment du fourrage, tel que par exemple des granulés, pour réaliser un procédé selon les revendications 1 à 4, comprenant un mélangeur et conditionneur (1), un dispositif de moulage (2) ou un moule à presse, un condenseur ainsi qu'un dispositif de concassage et de tamisage, **caractérisée en ce que** le condenseur comprend un précondenseur, (3) et un postcondenseur (6) physiquement séparé de ce dernier , le précondenseur (3) étant disposé en aval du dispositif de moulage (2) et le postcondenseur (6) étant disposé en aval du tamis (5) ou du dispositif de concassage et de tamisage.
